# EUROPÄISCHE PATENTSCHRIFT

(11) **EP 4 197 851 B1**
(45) Veröffentlichungstag und Bekanntmachung des Hinweises auf die Patenterteilung: **31.07.2024**
(21) Anmeldenummer: 22212955.3
(22) Anmeldetag: 12.12.2022
(51) Int. Cl.: B60L 53/302, B60L 53/31, B60L 58/26, B60L 58/27, B60L 53/53

(54) **LADESTATION FÜR EIN ELEKTRO- ODER HYBRIDFAHRZEUG**
CHARGING STATION FOR AN ELECTRIC OR HYBRID VEHICLE
STATION DE CHARGE POUR UN VÉHICULE ÉLECTRIQUE OU HYBRIDE

(30) Priorität: 14.12.2021 DE 102021133042
(43) Veröffentlichungstag der Anmeldung: 21.06.2023
(73) Patentinhaber: ads-tec Energy GmbH, 72622 Nürtingen (DE)
(72) Erfinder: Heyne, Raoul, 75446 Wiernsheim (DE); Speidel, Thomas, 71706 Markgröningen (DE); Bohner, Matthias, 70376 Stuttgart (DE)
(74) Vertreter: Karzel, Philipp

(56) Entgegenhaltungen:
- DE-A1- 102017 010 342
- DE-A1- 102018 213 614
- US-A1- 2018 257 501
- US-B2- 10 913 369

## Beschreibung

Die vorliegende Erfindung betrifft eine Ladestation für ein Elektro- oder Hybridfahrzeug, insbesondere eine Ladestation mit einer Vorrichtung zur Klimatisierung von Komponenten der Ladestation, sowie ein Verfahren zur Steuerung der Klimatisierungsvorrichtung.

### Hintergrund

Batterien von Elektro- und Hybridfahrzeugen, insbesondere von sogenannten Plug-In-Hybriden, deren Batterien mit extern zugeführter elektrischer Energie geladen werden können, speichern vorzugsweise eine große Menge elektrischer Energie, um eine große elektrische Reichweite zu ermöglichen.

Um die Batterien in einer kurzen Zeit laden zu können, müssen die Ladestationen große Ladeleistungen zur Verfügung stellen. Während Ladeleistungen bis 100 kW mit ggf. dreiphasigem Wechselstrom erzielt werden können, werden höhere Ladeleistungen bis hin zu 350 kW derzeit nur durch Laden mittels Gleichstrom erzielt. Insbesondere bei der Gleichstromladung können Batteriespeicher dazu genutzt werden, die elektrische Energie lokal zu speichern und an das zu ladende Fahrzeug abzugeben, ohne dass besonders aufwendige Anbindungen an das Stromnetz nötig werden.

Beim Laden und Entladen von Batterien eines Batteriespeichers erwärmen sich diese aufgrund der inneren Widerstände und der chemischen Reaktionen. Da die Zellenspannungen der Batterien und die maximalen Lade- und Entladeströme temperaturabhängig sind, ist insbesondere in extremen Klimata eine Klimatisierung des Batteriespeichers erforderlich, um stets eine größtmögliche Ladeleistung an zu ladende Fahrzeuge abgeben zu können und die Batterien des Batteriespeichers nicht zu schädigen. Extreme Klimata umfassen jedoch nicht nur besonders hohe Temperaturen, sondern auch besonders niedrige Temperaturen.

Klimatisierungsvorrichtungen zur Kühlung von Batterien und elektronischen Komponenten für heiße Regionen gehören mittlerweile in vielen Ladeinstallationen zum Standard. Auch die Möglichkeit zum Heizen der Ladestation ist häufig gegeben. Dazu weisen zum Heizen und Kühlen ausgelegte konventionelle Klimatisierungsvorrichtungen einen Kühlmittelkreislauf zum Leiten eines Kühlmittels zu dem zu temperierenden Element und einen Kältemittelkreislauf zum Leiten eines Kältemittels auf, wie beispielhaft in der US 10 913 369 B2 beschreiben ist. Typischerweise umfasst ein Kältemittelkreislauf einen Kompressor zum Verdichten des Kältemittels, einen Verflüssiger zum Überführen des Kältemittels von einem gasförmigen in einen flüssigen Zustand und ein Expansionsventil zum Expandieren des Kältemittels, wobei der Kühlmittelkreislauf und der Kältemittelkreislauf üblicherweise dazu ausgelegt sind, das Kühlmittel und das Kältemittel zwischen dem Expansionsventil und dem Kompressor in einen thermischen Kontakt zu bringen, um das Kühlmittel zu temperieren und somit das zu temperierende Element auf eine gewünschte Temperatur zu bringen bzw. auf einer gewünschten Temperatur zu halten. Sofern das zu temperierende Element erwärmt werden soll, wird ein an bzw. in dem Kühlmittelkreislauf angeordnetes Heizelement aktiviert, und der Kältemittelkreislauf wird deaktiviert.

Insbesondere in kompakten, standardisierten Ladeinstallationen wie bspw. die von der Dr. Ing. h.c. F. Porsche AG und der ads-tec Holding GmbH gemeinsam entwickelte und designte Charge Box ist der an sich naheliegende Einbau von Heizelementen für kalte Regionen u.a. aufgrund des knappen Platzes aufwendig und daher teuer. Außerdem müsste eine dadurch entstehende weitere Variante der Ladeinstallation eine erneute Zertifizierung durchlaufen, u.a. weil sich die Abstrahlung elektromagnetischer Störungen über die Luft und die Einkopplung von elektromagnetischen Störungen in ein Stromversorgungsnetz durch den geänderten Aufbau ändern könnten.

Es ist daher eine Aufgabe der vorliegenden Erfindung, eine mit einer Klimatisierungsvorrichtung zur Kühlung ausgestattete Ladestation für ein Elektro- oder Hybridfahrzeug anzugeben, welche einen darin angeordneten Batteriespeicher bei niedrigen Temperaturen ohne zusätzliches Heizelement erwärmen kann.

### Beschreibung der Erfindung

Diese Aufgabe wird durch die in Anspruch 1 angegebene Ladestation und das in Anspruch 3 angegebene Verfahren gelöst. Vorteilhafte Ausgestaltungen und Weiterentwicklungen sind in den abhängigen Ansprüchen angegeben.

Eine erfindungsgemäße Ladestation für ein Elektro- oder Hybridfahrzeug umfasst mindestens einen Batteriespeicher, eine Lade-/Entladeelektronik, mindestens eine Verbindung zu einem Fahrzeug-Ladeanschluss und eine Klimatisierungsvorrichtung zum Heizen und Kühlen zumindest des Batteriespeichers.

Die Klimatisierungsvorrichtung weist einen Kältemittelkreislauf zum Leiten eines Kältemittels und einen Kühlmittelkreislauf zum Leiten eines Kühlmittels auf. Der Kühlmittelkreislauf weist ein über eine Überlaufleitung mit einem Wärmereservoir verbundenes Kältereservoir auf. Das Wärmereservoir und das Kältereservoir sind ferner über regelbare Ventile mit mindestens einem, in einem den Batteriespeicher umschließenden Raum angeordneten ersten Wärmetauscher verbindbar.

Der Kältemittelkreislauf weist einen von einem Motor betriebenen Verdichter zum Verdichten des Kältemittels, einen Kondensator zum Überführen des Kältemittels von einem gasförmigen in einen flüssigen Zustand, ein Expansionsventil zum Expandieren bzw. Entspannen des Kältemittels und einen Verdampfer zum Überführen des Kältemittels von einem flüssigen in einen gasförmigen Zustand auf. Das Kältemittel steht in dem Verdampfer mit dem Kühlmittel in vermischungsfreiem thermischem Kontakt und entzieht dem von dem Kältereservoir kommenden Kühlmittel Wärme, bevor dieses wieder in das Kältereservoir gelangt. Dabei kühlt das Kältemittel weiter ab. In dem Kondensator steht das Kältemittel ebenfalls mit dem Kühlmittel in vermischungsfreiem thermischem Kontakt und gibt an dieses Wärme ab, bevor das so erwärmte Kühlmittel wieder in das Wärmereservoir gelangt. In dem Kondensator und in dem Verdampfer wird also nur Wärme ausgetauscht; ein Austausch von Fluiden erfolgt nicht.

Der Kondensator und das Wärmereservoir gehören zu einem ersten Teilkreislauf des Kühlmittelkreislaufs, wobei der Verdampfer und das Kältereservoir zu einem zweiten Teilkreislauf des Kühlmittelkreislaufs gehören.

Es ist eine Steuereinheit der Klimatisierungsvorrichtung dazu eingerichtet, die regelbaren Ventile sowie mindestens eine in dem Kühlmittelkreislauf angeordnete Pumpe so anzusteuern, dass ein in dem Kühlmittelkreislauf befindliches Kühlmittel zugleich aus dem Kältereservoir und dem Wärmereservoir zu dem mindestens einen ersten Wärmetauscher gefördert, und von dem ersten Wärmetauscher zurück in das das Kältereservoir gelangt, um einen thermischen Kurzschluss des Kühlmittelkreislaufs zwischen dem Wärmereservoir und dem Kältereservoir herzustellen und den Motor des Verdichters so lange zu betreiben, bis die Verlustwärme des fluidisch und/oder konvektionell mit dem den Batteriespeicher umgebenden Raum verbundenen Motors eine Temperaturerhöhung in dem Raum auf einen vorgegebenen Wert bewirkt hat.

Der Motor wird kontinuierlich und/oder mit hoher Leistung betrieben. Der thermische Kurzschluss führt dazu, dass das Kältereservoir und das Wärmereservoir fluidisch verbunden werden und sich die Temperaturen der beiden Reservoire aneinander annähern oder sich durch den Betrieb des Kältemittelkreislaufs nicht nennenswert voneinander entfernen, wie es im regulären Betrieb der Fall wäre.

Zur Herstellung des thermischen Kurzschlusses zwischen dem Wärmereservoir und dem Kältereservoir sind die regelbaren Ventile sowie mindestens eine in dem Kühlmittelkreislauf angeordnete Pumpe so angesteuert, dass das in dem Kühlmittelkreislauf befindliche Kühlmittel zugleich aus dem Kältereservoir und dem Wärmereservoir zu dem mindestens einen ersten Wärmetauscher gefördert wird. Die Temperatur in dem Kältereservoir, in welches das von dem ersten Wärmetauscher kommende Kühlmittel geleitet wird, wird dadurch nicht nennenswert erhöht, da in dieser Betriebsart das Wärmereservoir keine für eine Erwärmung ausreichende Wärmemenge gespeichert hat. Sofern das Wärmereservoir eine gewisse Wärmemenge gespeichert haben sollte, kann diese zunächst in einer Heizbetriebsart über den zweiten Wärmetauscher an den den Batteriespeicher umgebenden Raum abgegeben werden, bevor die Klimatisierungseinrichtung der Ladestation betrieben wird.

Die fluidische und/oder konvektionelle Verbindung zwischen dem Motor und dem den Batteriespeicher umgebenden Raum kann bspw. über einen Luftkanal hergestellt sein, oder über Durchbrüche in der Wand des den Batteriespeicher umgebenden Raums zu einem Raum, in welchem der Motor angeordnet ist. Es ist auch möglich, den Motor in dem den Batteriespeicher umgebenden Raum anzuordnen. Ein in dem den Batteriespeicher umgebenden Raum angeordneter Ventilator bewirkt eine Luftströmung in Richtung des Motors, so dass die als Wärme abzuführende Verlustleistung des Motors in dem Raum zirkulieren kann und diesen erwärmt. Der Ventilator kann auch einen Luftstrom in Richtung des ersten Wärmetauschers bewirken, so dass in einem Kühlbetrieb ein Luftstrom mit warmer Luft in Richtung des zweiten Wärmetauschers geleitet wird. Zugleich kann so in einer Betriebsart, in welcher der Kühlkreislauf nicht thermisch kurzgeschlossen ist, die Abwärme des Motors abgeführt werden.

Ein erfindungsgemäßes Verfahren zur Steuerung einer vorstehend beschriebenen Klimatisierungsvorrichtung einer Ladestation für Elektro- und Hybridfahrzeuge in einem erfindungsgemäßen Heizbetrieb umfasst das Schalten von regel- und/oder steuerbaren Ventilen sowie das Ansteuern mindestens einer Pumpe eines Kühlmittelkreislaufs, so dass Kühlmittel aus einem Wärmereservoir und aus einem Kältereservoir zugleich an einen in einem einen Batteriespeicher umgebenden Raum angeordneten ersten Wärmetauscher gelangt. Von dem Wärmetauscher gelangt das Kühlmittel dann in das Kältereservoir. Zugleich wird der Motor eines Verdichters eines Kältemittelkreislaufs, welcher über einen Kondensator und einen Verdampfer in thermischem Kontakt mit dem Kühlmittelkreislauf steht, betrieben, und die als Wärme auftretende Verlustleistung der fluidischen und/oder konvektionellen Verbindung mit dem den Batteriespeicher umgebenden Raum verbundenen Motors wird dazu genutzt, den Raum und somit den darin befindlichen Batteriespeicher zu erwärmen. Um eine bessere Umwälzung der von dem Motor erwärmten Luft in dem den Batteriespeicher umgebenden Raum zu erreichen, kann ein in dem Raum angeordneter Ventilator betrieben werden. Sobald die zumindest in dem Heizbetrieb periodisch oder kontinuierlich gemessene Temperatur in dem den Batteriespeicher und/oder dem diesen umgebenden Raum einen festgelegten Wert erreicht oder überschritten hat, kann das Laden oder Entladen der Batterie mit der maximalen Lade- oder Entladeleistung erfolgen. Der thermische Kurzschluss kann nun wieder aufgehoben werden, und die Klimatisierungsvorrichtung kann wieder in einer normalen Betriebsart betrieben werden, um in dem Batteriespeicher und der Lade- bzw. Entladeelektronik anfallende Verlustwärme über den Kühlmittelkreislauf und den Kältemittelkreislauf dem Wärmereservoir zuzuführen oder an die Umgebungsluft abzuführen.

Eine erfindungsgemäße Steuereinheit einer Klimatisierungsvorrichtung umfasst einen Mikroprozessor, flüchtigen und nichtflüchtigen Speicher sowie Sensoreingänge und Steuerausgänge. Der nichtflüchtige Speicher enthält Computerprogramminstruktionen, welche wenn sie von dem Mikroprozessor in dem flüchtigen Speicher ausgeführt werden, die Steuervorrichtung dazu einrichten, das erfindungsgemäße Verfahren auszuführen und die Klimatisierungsvorrichtung in dem erfindungsgemäßen Heizbetrieb zu betreiben. Die Computerprogramminstruktionen stellen ein eigenständiges Computerprogrammprodukt dar.

Das Computerprogrammprodukt kann auf einem computerlesbaren Medium bzw. Datenträger gespeichert sein. Das Medium bzw. der Datenträger kann physisch verkörpert sein, bspw. als Festplatte, CD, DVD, Flash-Speicher oder dergleichen, das Medium bzw. der Datenträger kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

### Kurze Beschreibung der Zeichnung

Im Folgenden wird die Erfindung anhand der Zeichnung beispielhaft beschrieben. In der Zeichnung zeigt
- Fig. 1: eine schematische Darstellung einer erfindungsgemäßen Ladestation für ein Elektro- oder Hybridfahrzeug,
- Fig. 2: ein schematisches Schaltbild einer erfindungsgemäßen Klimatisierungsvorrichtung einer Ladestation für ein Elektro- oder Hybridfahrzeug, und
- Fig. 3: ein Flussdiagramm eines beispielhaften Verfahrens zur Steuerung einer erfindungsgemäßen Klimatisierungsvorrichtung einer Ladestation für ein Elektro- oder Hybridfahrzeug.

Gleiche oder ähnliche Elemente können in der Zeichnung mit denselben Bezugszeichen referenziert sein.

### Beschreibung von Ausführungsbeispielen

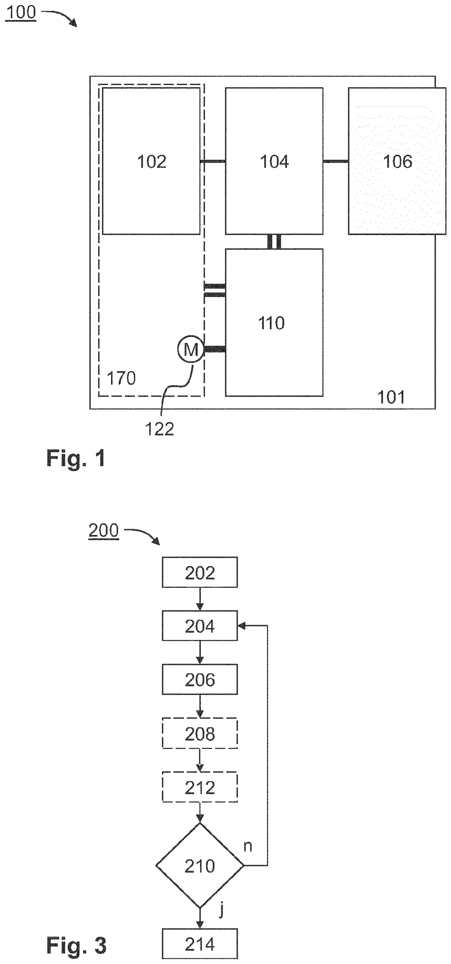

Figur 1 zeigt eine schematische Darstellung einer erfindungsgemäßen Ladestation 100 für ein Elektro- oder Hybridfahrzeug. Die Ladestation 100 umfasst ein Gehäuse 101, in welchem ein Batteriespeicher 102, eine Lade-/Entladeelektronik 104, mindestens eine Verbindung 106 zu einem Fahrzeug-Ladeanschluss und eine Klimatisierungsvorrichtung 110 zum Erwärmen und Kühlen zumindest des Batteriespeichers 102. Der Batteriespeicher 102, die Lade-/Entladeelektronik 104 und die mindestens eine Verbindung 106 zu einem Fahrzeug-Ladeanschluss sind elektrisch miteinander verbunden, angedeutet durch die einfachen Verbindungslinien. Die Klimatisierungsvorrichtung 110 ist thermisch zumindest mit der Lade-/Entladeelektronik 104 und einem Raum 170 verbunden, in welchem der Batteriespeicher angeordnet ist. Die thermische Verbindung kann zum Heizen oder Kühlen in einer konventionellen Art und Weise ausgelegt sein. Ein zu der Klimatisierungsvorrichtung 110 gehöriger Motor 122, welcher einen in der Figur nicht gezeigten Verdichter der Klimatisierungsvorrichtung 110 antreibt, ist fluidisch mit dem Raum 170 verbunden. In der Figur ist der Motor in dem Raum 170 angeordnet, wenngleich andere Arten fluidischer Verbindungen möglich sind, bspw. Luftkanäle oder dergleichen. Der Motor 122 ist vorzugsweise unterhalb des Batteriespeichers 102 angeordnet, so dass die als Wärme in Erscheinung tretende Verlustleistung des Motors 122, welche durch Konvention nach ober steigt, den Batteriespeicher 102 erwärmen oder ggf. über die thermische Verbindung des Raums mit der Klimatisierungsvorrichtung 110 abgeführt werden kann.

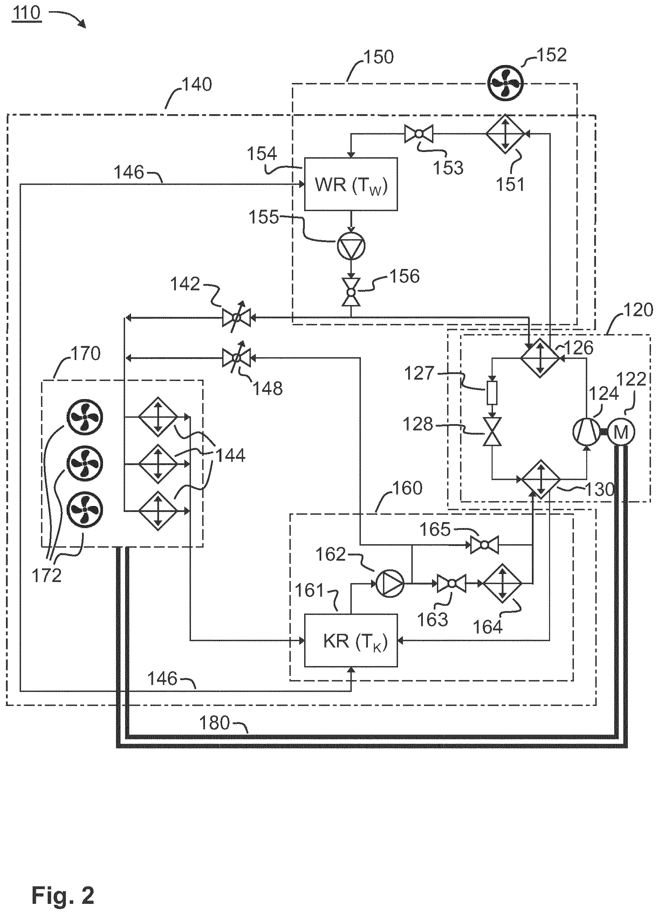

Figur 2 zeigt ein schematisches Schaltbild einer erfindungsgemäßen Klimatisierungsvorrichtung 110 einer Ladestation 100 für ein Elektro- oder Hybridfahrzeug. Die Klimatisierungsvorrichtung 110 umfasst einen Kältemittelkreislauf 120 zum Leiten eines Kältemittels und einen Kühlmittelkreislauf 140 zum Leiten eines Kühlmittels. Der Kältemittelkreislauf 120 umfasst einen von einem Motor 122 betriebenen Verdichter 124 zum Verdichten des Kältemittels. Das durch das Verdichten erwärmte Kältemittel gelangt zunächst an einen Kondensator 126, welcher in Wärmeaustausch mit einem ersten Teilkreislauf 150 des Kühlmittelkreislaufs 140 steht, und an diesen ersten Teilkreislauf 150 Wärme abgibt. Der Wärmeaustausch in dem Kondensator 126 erfolgt durch vermischungsfreies Aneinander vorbeiführen des Kältemittels und des Kühlmittels des Kühlmittelkreislaufs 140. Das kondensierte und abgekühlte Kältemittel gelangt, vom Kondensator 126 kommend, an ein Expansionsventil 128. Vor dem Expansionsventil kann ein Sammler 127 angeordnet sein, der das unter Druck stehende Kondensat aufnimmt. Das Expansionsventil 128 entspannt bzw. expandiert das Kältemittel, wobei es sich weiter abkühlt. Das abgekühlte, entspannte Kältemittel wird an einen Verdampfer 130 geführt, welcher in Wärmeaustausch mit einem zweiten Teilkreislauf 160 des Kühlmittelkreislaufs 140 steht, und von diesem zweiten Teilkreislauf 160 Wärme aufnimmt. Das nun wieder erwärmte Kältemittel wird zurück an den Verdichter 124 geleitet, wo der Kreislauf erneut durchlaufen wird.

Der erste Teilkreislauf 150 des Kühlmittelkreislaufs 140 umfasst einen zweiten Wärmetauscher 151, welcher mit der Umgebungsluft eines Gehäuses der Ladestation 100 in Wärmeaustausch steht. Das in dem Kondensator 126 erwärmte Kühlmittel wird durch den zweiten Wärmetauscher 151 geleitet, wo es Wärme an die Umgebungsluft abgeben kann. Da die durch eine reine Konvektion bewirkte Luftzirkulation in der Regel nicht ausreicht, kann der Wärmeaustausch durch einen oder mehrere Lüfter oder Ventilatoren 152 verbessert sein, welche bei Bedarf einen auf den zweiten Wärmetauscher 151 gerichteten Luftstrom erzwingen. Von dem zweiten Wärmetauscher 151 wird das Kühlmittel über ein Absperrventil 153 an ein Wärmereservoir 154 geleitet, in welchem sich das immer noch erwärmte Kühlmittel sammeln kann. Von dem Wärmereservoir 154 wird das Kühlmittel über eine Pumpe 155 und ein Absperrventil 156 wieder zu dem Kondensator 126 geführt. Das Kühlmittel kann in diesem ersten Teilkreislauf 150 zirkulieren. Alternativ kann ein Teil des Kühlmittels aus dem ersten Teilkreislauf 150 über ein regelbares Ventil 142 an einen ersten Wärmetauscher 144 geleitet werden, welcher in Wärmeaustausch mit einem einen Batteriespeicher umschließenden Raum 170 steht, um den den Batteriespeicher 102 umschließenden Raum 170 zu erwärmen. Der Wärmeaustausch kann durch einen oder mehrere Lüfter oder Ventilatoren 172 verbessert sein, welche bei Bedarf einen an dem ersten Wärmetauscher 144 entlangführenden Luftstrom erzwingen.

Von dem ersten Wärmetauscher 144 gelangt das Kühlmittel an ein Kältereservoir 161 des zweiten Teilkreislaufs 160 des Kühlmittelkreislaufs 140. Aus dem Kältereservoir 161 wird das Kühlmittel mittels einer Pumpe 162 und über ein Absperrventil 163 an einen dritten Wärmetauscher 164 geleitet, welcher in Wärmeaustausch mit elektronischen Komponenten der Ladestation 100 steht, um diese bei Bedarf zu kühlen. Von dem dritten Wärmetauscher 164 wird das erwärmte Kühlmittel über den Verdampfer 130 geleitet, wo es Wärme an das Kältemittel des Kältemittelkreislaufs abgibt. Ein Bypassventil 165 überbrückt wahlweise das Absperrventil 163 und den dritten Wärmetauscher 164. Von der Pumpe 162 führt eine weitere Leitung an ein regelbares Ventil 148, so dass der erste Wärmetauscher 144 wahlweise mit kaltem Kühlmittel aus dem Kältereservoir beaufschlagt werden kann, um den den Batteriespeicher 102 umschließenden Raum 170 zu kühlen. Das Kältereservoir 161 ist außerdem über eine Überlaufleitung 146 mit dem Wärmereservoir 154 fluidisch verbunden.

Bei sehr niedrigen Außentemperaturen und bei Nichtbenutzung der Ladestation 100 über einen Zeitraum von mehreren Stunden kann das Wärmereservoir 154 abgekühlt sein, weil die elektronischen Komponenten keine Wärme erzeugt haben, welche über den dritten Wärmetauscher 164 hätte abgeführt werden müssen. Eine Erwärmung des den Batteriespeicher 102 umgebenden Raums 170 alleine durch die in dem Wärmereservoir 154 gespeicherte Wärme kann daher nicht mehr möglich sein. Die Temperatur des Batteriespeichers 102 kann entsprechend außerhalb eines optimalen Betriebstemperaturbereichs liegen, in welchem die größtmögliche Leistung abgegeben werden kann. Da kein gesondertes Heizelement für den den Batteriespeicher 102 umgebenden Raum 170 vorgesehen ist, muss die benötigte Wärme auf anderem Wege erzeugt werden.

Erfindungsgemäß ist der den Verdichter 124 antreibende Motor 122 mittels einer fluidischen und/oder konvektionellen Verbindung mit dem den Batteriespeicher 102 umgebenden Raum 170 verbunden. Diese Verbindung kann durch einen Luftkanal 180 erreicht werden, über welchen Luft aus dem Raum 170 an dem Motor 122 vorbeigeführt wird und sich so erwärmt, oder einfach dadurch, dass der Motor 122 in dem Raum 170 angeordnet ist und von der darin enthaltenen Luft umströmt wird. Der Motor kann eine Verlustleistung in Form von Wärme in einer Größenordnung von mehreren kW abgeben. Da der Raum 170 nur wenige Kubikmeter groß ist, kann bei voller Leistung des Motors die Luft in dem Raum rasch erwärmt werden. Die erwärmte Luft erwärmt entsprechend auch den in dem Raum 170 angeordneten Batteriespeicher 102.

Da der Motor 122 jedoch von einer Temperaturregelung gesteuert wird, welche in erster Linie eine Kühlung von elektronischen Komponenten und des Batteriespeichers 102 bewirken soll, eine weitere Abkühlung in diesem Moment aber nicht gewünscht ist, ist erfindungsgemäß eine spezielle Heizbetriebsart erforderlich.

In dieser speziellen Heizbetriebsart fördern die Pumpen 155 und 162 zugleich Kühlmittel aus dem Wärmereservoir 154 und dem Kältereservoir 161 über die gleichzeitig geöffneten regelbaren Ventile 142 und 148 zu dem ersten Wärmetauscher 144, welcher in dem den Batteriespeicher 102 umgebenden Raum 170 angeordnet ist. Da keine Leistung an ein zu ladendes Fahrzeug abgegeben wird, die elektronischen Komponenten also keine Wärme erzeugen, wird dieser Zweig des zweiten Teilkreislaufs 160 des Kühlmittelkreislaufs 140 über ein Absperrventil 163 abgesperrt und über ein Bypassventil 165 kurzgeschlossen. Dem ersten Wärmetauscher 144 strömt nun ein Gemisch aus kaltem und noch warmem Kühlmittel zu, welches für eine effektive Erwärmung des Raums 170 nicht ausreicht. Von dem ersten Wärmetauscher 144 gelangt das Kühlmittel in das Kältereservoir 161. Der Kühlmittelkreislauf 140 wird so quasi in einem thermischen Kurzschluss betrieben.

Die Steuerung der Klimatisierungsvorrichtung wird nun versuchen, eine Temperaturdifferenz zwischen Kältereservoir 161 und Wärmereservoir 154 herzustellen, und wird dazu den Kältemittelkreislauf 120 mit voller Leistung betreiben. In erster Linie bedeutet das, dass der Motor 122 dauerhaft betrieben wird, und seine Verlustleistung an die in dem Raum 170 zirkulierende Luft abgeben wird. In dem Raum 170 angeordnete Ventilatoren 172, welche einen zu dem ersten Wärmetauscher 144 gerichteten Luftstrom erzeugen, können die Zirkulation der durch die Verlustwärme des Motors 122 erwärmten Luft verbessern, so dass alle Bereiche des Raums 170 sowie der darin angeordnete Batteriespeicher 102 sich erwärmen. Der Ventilator 152, welcher im normalen Betrieb überschüssige Wärme aus dem ersten Teilkreislauf 150 des Kühlmittelkreislaufs 140 an die Umgebungsluft der Ladestation 100 abführen soll, wird während dieser Zeit nicht betrieben, so dass die Abkühlung des in dem ersten Teilkreislauf 150 des Kühlmittelkreislaufs 140 gering gehalten wird.

Sobald der Batteriespeicher 102 eine Temperatur erreicht hat, in welcher eine ausreichende Lade- bzw. Entladeleistung abgegeben werden kann, wird der thermische Kurzschluss des Kühlmittelkreislaufs 120 wieder aufgehoben. Die Pumpen 155 und 162 werden wieder nach Bedarf alternativ betrieben, und die regelbaren Ventile 142 und 148 werden nach Bedarf alternativ geöffnet. Das Bypassventil 165 wird geschlossen, und die beim Laden bzw. Entladen in den elektronischen Komponenten erzeugte Verlustwärme wird über den dritten Wärmetauscher 164 abgeführt, welcher über das das nun wieder geöffnete Absperrventil 163 mit dem zweiten Teilkreislauf 160 des Kühlmittelkreislaufs 140 verbunden ist. Sofern die Temperatur in dem Raum 170 noch nicht hoch genug ist, kann der Ventilator 152 außer Betrieb bleiben, so dass das Wärmereservoir 154 eine zum weiteren Erwärmen des Raums 170 ausreichend hohe Temperatur erreichen kann.

Figur 3 zeigt ein Flussdiagramm eines beispielhaften Verfahrens 200 zur Steuerung einer erfindungsgemäßen Klimatisierungsvorrichtung 110 einer Ladestation 100 für ein Elektro- oder Hybridfahrzeug in einem Heizbetrieb. In Schritt 202 werden steuer- oder regelbare Ventile 142, 148 und mindestens eine der Pumpen 155, 162 des Kühlmittelkreislaufs 140 derart angesteuert, dass Kühlmittel aus einem Wärmereservoir 154 und einem Kältereservoir 161 des Kühlmittelkreislaufs 140 zugleich an einen in einem einen Batteriespeicher 102 umgebenden Raum 170 angeordneten ersten Wärmetauscher 144 und von dem ersten Wärmetauscher 144 zurück in das Kältereservoir 161 gelangt. Außerdem wird, in Schritt 204, ein fluidisch mit dem den Batteriespeicher 102 umgebenden Raum 170 verbundener Motor 122 eines Verdichters 124 eines thermisch mit dem Kühlmittelkreislauf 140 verbundenen Kältemittelkreislaufs 120 betrieben. In Schritt 206 wird die Temperatur des Batteriespeichers 102 und/oder der des diesen umgebenden Raums 170 zyklisch oder kontinuierlich gemessen. Dieser Heizbetrieb wird zumindest solange aufrechterhalten, bis die gemessene Temperatur einen vorgegebenen Wert erreicht oder überschritten hat. Eine entsprechende Überprüfung erfolgt in Schritt 210. Ein in dem den Batteriespeicher 102 umgebenden Raum 170 angeordneter Ventilator 172 kann parallel dazu betrieben werden, um eine Luftströmung in dem Raum 170 zu erzeugen, Schritt 208. Außerdem kann, in Schritt 212, ein einer Lade- oder Entladeelektronik zugeführtes Signal erzeugt werden, welches die gemessene Temperatur oder das Erreichen bzw. Überschreiten des vorgegebenen Temperaturwerts repräsentiert. Wenn die gemessene Temperatur einen vorgegebenen Wert erreicht oder überschritten hat kann eine größtmögliche Lade- oder Entladeleistung der Ladestation freigegeben werden. Da durch die Ladung bzw. Entladung des Batteriespeichers 102 in dem Batteriespeicher 102 selbst und in der Lade-/Entladeelektronik als Wärme in Erscheinung tretende Verlustleistungen auftreten, welche abgeführt werden müssen, kann die Klimatisierungsvorrichtung nun wieder in einem konventionellen Kühl- bzw. Heizbetrieb betrieben werden, und der thermische Kurzschluss des Kühlmittelkreislaufs kann aufgehoben werden, Schritt 214.

## Patentansprüche

1. Ladestation (100) für ein Elektro- oder Hybridfahrzeug,
wobei die Ladestation (100) mindestens einen Batteriespeicher (102), eine Lade-/Entladeelektronik (104), mindestens eine Verbindung (106) zu einem Fahrzeug-Ladeanschluss und eine Klimatisierungsvorrichtung (110) zum Erwärmen und Kühlen zumindest des Batteriespeichers (102) umfasst,
wobei die Klimatisierungsvorrichtung (110) einen Kältemittelkreislauf (120) zum Leiten eines Kältemittels und einen Kühlmittelkreislauf (140) zum Leiten eines Kühlmittels aufweist,
wobei der Kältemittelkreislauf (120) einen von einem Motor (122) betriebenen Verdichter (124) zum Verdichten des Kältemittels, einen Kondensator (126) zum Überführen des Kältemittels von einem gasförmigen in einen flüssigen Zustand, ein Expansionsventil (128) zum Expandieren bzw. Entspannen des Kältemittels und einen Verdampfer (130) zum Überführen des Kältemittels von einem flüssigen in einen gasförmigen Zustand aufweist,
wobei der Kühlmittelkreislauf (140) ein über eine Überlaufleitung (146) mit einem Wärmereservoir (154) verbundenes Kältereservoir (161) aufweist, wobei das Wärmereservoir (154) und das Kältereservoir (161) über jeweilige regelbare Ventile (142, 148) mit mindestens einem, in einem den Batteriespeicher (102) umschließenden Raum (170) angeordneten ersten Wärmetauscher (144) verbindbar sind,
wobei der Kondensator (126) und das Wärmereservoir (154) zu einem ersten Teilkreislauf (150) des Kühlmittelkreislaufs (140) gehören,
und wobei der Verdampfer (130) und das Kältereservoir (161) zu einem zweiten Teilkreislauf (160) des Kühlmittelkreislaufs (140) gehören, wobei eine Steuereinheit der Klimatisierungsvorrichtung (110) dazu eingerichtet ist,
die regelbaren Ventile (142, 148) sowie mindestens eine in dem Kühlmittelkreislauf (140) angeordnete Pumpe (155, 162) so anzusteuern, dass ein in dem Kühlmittelkreislauf (140) befindliches Kühlmittel zugleich aus dem Kältereservoir (161) und dem Wärmereservoir (154) zu dem mindestens einen ersten Wärmetauscher (144) gefördert wird, und von dem ersten Wärmetauscher (144) zurück in das Kältereservoir (161) gefördert wird, um einen thermischen Kurzschluss des Kühlmittelkreislaufs (140) zwischen dem Wärmereservoir (154) und dem Kältereservoir (161) herzustellen,
und den Motor (122) des Verdichters (124) so lange zu betreiben, bis die Verlustwärme des fluidisch und/oder konvektionell mit dem den Batteriespeicher (102) umgebenden Raum (170) verbundenen Motors (122) eine Temperaturerhöhung in dem Raum (170) auf oder über einen vorgegebenen Wert bewirkt hat.

2. Ladestation nach Anspruch 1, wobei ein in dem den Batteriespeicher (102) umgebenden Raum (170) angeordneter Ventilator (172) einen Luftstrom in Richtung des Motors (122), wo die Luft Abwärme des Motors (122) aufnimmt, und in den den Batteriespeicher (102) umgebenden Raum (170) befördert.

3. Verfahren (200) zum Betrieb einer Klimatisierungsvorrichtung (110) einer Ladestation (100) nach Anspruch 1 oder 2 in einem Heizbetrieb, umfassend:
- Ansteuern (202) von steuer- und/oder regelbaren Ventilen (142, 148) und mindestens einer Pumpe (155, 162) eines Kühlmittelkreislaufs (140) derart, dass Kühlmittel aus einem Wärmereservoir (154) und einem Kältereservoir (161) des Kühlmittelkreislaufs (140) zugleich an einen in einem einen Batteriespeicher (102) umgebenden Raum (170) angeordneten ersten Wärmetauscher (144) und von dem ersten Wärmetauscher (144) zurück in das Kältereservoir (161) gelangt,
- Betreiben (204) eines fluidisch und/ oder konvektionell befüllten mit dem den Batteriespeicher (102) umgebenden Raum (170) verbundenen Motors (122) eines Verdichters (124) eines thermisch mit dem Kühlmittelkreislauf (140) verbundenen Kältemittelkreislaufs (120), und
- Messen (206) der Temperatur des Batteriespeichers (102) und/oder des diesen umgebenden Raums (170),
wobei der Heizbetrieb zumindest so lange aufrechterhalten wird, bis die gemessene Temperatur einen vorgegebenen Wert erreicht oder überschritten hat.

4. Verfahren (200) nach Anspruch 3, außerdem umfassend:
- Betreiben (208) eines in dem den Batteriespeicher (102) umgebenden Raums (170) angeordneten Ventilators (172), um eine Luftströmung in dem Raum (170) zu erzeugen.

5. Verfahren (200) nach Anspruch 3 oder 4, außerdem umfassend:
- Erzeugen (212) eines einer Lade- oder Entladeelektronik zugeführten Signals, welches die gemessene Temperatur oder das Erreichen bzw. Überschreiten des vorgegebenen Temperaturwerts repräsentiert.

6. Computerprogrammprodukt umfassend durch einen Mikroprozessor ausführbare Computerprogramminstruktionen, die bei der Ausführung der Computerprogramminstruktionen durch eine Steuereinheit einer Klimatisierungsvorrichtung (110) einer Ladestation (100) nach Anspruch 1 oder 2 diese dazu einrichten bzw. veranlassen, jeweilige Schritte des Verfahrens (200) nach einem der Ansprüche 4 oder 5 auszuführen.

## Claims

1. Charging station (100) for an electric or hybrid vehicle,
wherein the charging station (100) comprises at least one battery bank (102), a charging/discharging electronics system (104), at least one connection (106) to a vehicle charging port, and an air conditioning device (110) for heating and cooling at least the battery bank (102),
wherein the air conditioning device (110) includes a refrigerant circuit (120) for conducting a refrigerant and a coolant circuit (140) for conducting a coolant, wherein the refrigerant circuit (120) includes a compressor (124) operated by a motor (122) for compressing the refrigerant, a condenser (126) for transferring the refrigerant from a gaseous state into a liquid state, an expansion valve (128) for expanding and decompressing the refrigerant and an evaporator (130) for transferring the refrigerant from a liquid state into a gaseous state,
wherein the coolant circuit (140) includes a cold reservoir (161) connected to a heat reservoir (154) via an overflow line (146),
wherein the heat reservoir (154) and the cold reservoir (161) are connectable via respective regulatable valves (142, 148) to at least one first heat exchanger (144) arranged in a space (170) surrounding the battery bank (102),
wherein the condenser (126) and the heat reservoir (154) belong to a first sub-circuit (150) of the coolant circuit (140),
and wherein the evaporator (130) and the cold reservoir (161) belong to a second sub-circuit (160) of the coolant circuit (140),
wherein a control unit of the air conditioning device (110) is configured for activating the regulatable valves (142, 148) and at least one pump (155, 162) arranged in the coolant circuit (140) in such a way that a coolant located in the coolant circuit (140) is simultaneously conveyed out of the cold reservoir (161) and the heat reservoir (154) to the at least one first heat exchanger (144), and is conveyed from the first heat exchanger (144) back into the cold reservoir (161), in order to establish the thermal short circuit of the coolant circuit (140) between the heat reservoir (154) and the cold reservoir (161),
and operating the motor (122) of the compressor (124) for as long as it takes for the waste heat of the motor (122) connected to the space (170) surrounding the battery bank (102), the space (170) being filled with a fluidic and/or convection-based connection, to effectuate a temperature increase in the space (170) to or above a predefined value.

2. Charging station according to claim 1,
wherein a cooling fan (172) arranged in the space (170) surrounding the battery bank (102) effectuates an air flow in the direction of the motor (122), where the air absorbs heat of the motor (122) and conveys the heat of the motor (122) into the space (170) surrounding the battery bank (102).

3. Method (200) for operating an air conditioning device (110) of a charging station (100) according to claims 1 or 2 in a heating mode, including:
- activating (202) controllable and/or regulatable valves (142, 148) and at least one pump (155, 162) of a coolant circuit (140) in such a way that coolant from a heat reservoir (154) and a cold reservoir (161) of the coolant circuit (140) simultaneously reaches a first heat exchanger (144) arranged in a space (170) surrounding a battery bank (102) and returns to the cold reservoir (161) from the first heat exchanger (144),
- operating (204) a motor (122) of a compressor (124) of a refrigerant circuit (120) thermally connected to the coolant circuit (140), the motor (122) being connected to the space (170) surrounding the battery bank (102), the space (170) being filled fluidically and/or by means of convection, and
- measuring (206) the temperature of the battery bank (102) and/or of the space (170) surrounding the battery bank (102),
wherein the heating mode is maintained at least for as long as it takes for the measured temperature to reach or exceed a predefined value.

4. Method (200) according to claim 3, also including:
- operating (208) a cooling fan (172) arranged in the space (170) surrounding the battery bank (102), in order to generate an air flow in the space (170).

5. Method (200) according to claim 3 or 4, also including:
- generating (212) a signal routed to a charging or discharging electronics system, the signal representing the measured temperature or the attainment or exceedance of the predefined temperature value.

6. Computer program product including computer program instructions executable by a microprocessor, which, upon execution of the computer program instructions by a control unit of an air conditioning device (110) of a charging station (100) according to claim 1 or 2, configure or prompt the control unit to carry out particular steps of the method (200) according to either of claims 4 and 5.

## Revendications

1. Station de charge (100) pour un véhicule électrique ou hybride, la station de charge (100) comprenant au moins un accumulateur (102), une électronique de charge/ décharge (104), au moins une liaison (106) avec une borne de charge de véhicule et un dispositif de climatisation (110) pour réchauffer et refroidir au moins l'accumulateur (102),
dans laquelle le dispositif de climatisation (110) présente un circuit de fluide frigorigène (120) pour acheminer un fluide frigorigène et un circuit de fluide de refroidissement (140) pour acheminer un fluide de refroidissement,
dans laquelle le circuit de fluide frigorigène (120) présente un compresseur (124) actionné par un moteur (122) pour comprimer le fluide frigorigène, un condenseur (126) pour faire passer le fluide frigorigène d'un état gazeux à un état liquide, une soupape de détente (128) pour expanser ou détendre le fluide frigorigène, et un évaporateur (130) pour faire passer le fluide frigorigène d'un état liquide à un état gazeux,
dans laquelle le circuit de fluide de refroidissement (140) présente un réservoir frigorifique (161) relié à un réservoir thermique (154) par l'intermédiaire d'une conduite de trop-plein (146),
dans laquelle le réservoir thermique (154) et le réservoir frigorifique (161) peuvent être reliés par des vannes réglables (142, 148) respectives à au moins un premier échangeur de chaleur (144) disposé dans un espace (170) entourant l'accumulateur (102),
dans laquelle le condenseur (126) et le réservoir thermique (154) font partie d'un premier circuit partiel (150) du circuit de fluide de refroidissement (140),
et dans laquelle l'évaporateur (130) et le réservoir frigorifique (161) font partie d'un deuxième circuit partiel (160) du circuit de fluide de refroidissement (140), dans laquelle une unité de commande du dispositif de climatisation (110) est conçue
pour piloter les vannes réglables (142, 148) ainsi qu'au moins une pompe (155, 162) disposée dans le circuit de fluide de refroidissement (140) de telle sorte qu'un fluide de refroidissement se trouvant dans le circuit de fluide de refroidissement (140) soit refoulé en même temps à partir du réservoir frigorifique (161) et du réservoir thermique (154) jusqu'audit au moins un premier échangeur de chaleur (144), et du premier échangeur de chaleur (144) de retour dans le réservoir frigorifique (161) afin de créer un court-circuit thermique du circuit de fluide de refroidissement (140) entre le réservoir thermique (154) et le réservoir frigorifique (161),
et pour faire fonctionner le moteur (122) du compresseur (124) jusqu'à ce que la chaleur dissipée du moteur (122) relié de manière fluidique et/ou par convection à l'espace (170) entourant l'accumulateur (102) ait provoqué une augmentation de la température dans l'espace (170) égale ou supérieure à une valeur prédéfinie.

2. Station de charge selon la revendication 1,
dans laquelle un ventilateur (172) disposé dans l'espace (170) entourant l'accumulateur (102) envoie un flux d'air en direction du moteur (122) à l'endroit où l'air absorbe la chaleur dissipée du moteur (122) et dans l'espace (170) entourant l'accumulateur (102).

3. Procédé (200) permettant de faire fonctionner un dispositif de climatisation (110) d'une station de charge (100) selon la revendication 1 ou 2 dans un mode de chauffage, comprenant les étapes consistant à :
- piloter (202) des vannes (142, 148) pouvant être commandées et/ou régulées, et au moins une pompe (155, 162) d'un circuit de fluide de refroidissement (140) de telle sorte qu'un liquide de refroidissement passe d'un réservoir thermique (154) et d'un réservoir frigorifique (161) du circuit de fluide de refroidissement (140) en même temps jusqu'à un premier échangeur de chaleur (144) disposé dans un espace (170) entourant un accumulateur (102) et du premier échangeur de chaleur (144) de retour dans le réservoir frigorifique (161),
- faire fonctionner (204) un moteur (122) rempli de manière fluidique et/ou par convection, relié à l'espace (170) entourant l'accumulateur (102), d'un compresseur (124) d'un circuit de fluide frigorigène (120) relié thermiquement au circuit de fluide de refroidissement (140), et
- mesurer (206) la température de l'accumulateur (102) et/ou de l'espace (170) qui l'entoure,
dans lequel le mode de chauffage est maintenu au moins jusqu'à ce que la température mesurée ait atteint ou dépassé une valeur prédéfinie.

4. Procédé (200) selon la revendication 3, comprenant en outre l'étape consistant à :
- faire fonctionner (208) un ventilateur (172) disposé dans l'espace (170) entourant l'accumulateur (102) afin de générer un écoulement d'air dans l'espace (170).

5. Procédé (200) selon la revendication 3 ou 4, comprenant en outre l'étape consistant à :
- générer (212) un signal amené à une électronique de charge ou de décharge, qui représente la température mesurée ou le fait d'atteindre ou de dépasser la valeur de température prédéfinie.

6. Produit de programme informatique, comprenant des instructions de programme informatique exécutables par un microprocesseur qui, lors de l'exécution des instructions de programme informatique par une unité de commande d'un dispositif de climatisation (110) d'une station de charge (100) selon la revendication 1 ou 2, aménagent celle-ci ou font que celle-ci exécute les étapes respectives du procédé (200) selon l'une quelconque des revendications 4 ou 5.
